(19) Europäisches Patentamt
European Patent Office
Office européen des brevets

(11) **EP 3 156 259 B1**

(12) **EUROPEAN PATENT SPECIFICATION**

(45) Date of publication and mention
of the grant of the patent:
**31.10.2018 Bulletin 2018/44**

(51) Int Cl.:
***B60C 11/03*** *(2006.01)*     ***B60C 11/12*** *(2006.01)*

(21) Application number: **15807378.3**

(86) International application number:
**PCT/JP2015/064875**

(22) Date of filing: **25.05.2015**

(87) International publication number:
**WO 2015/190273 (17.12.2015 Gazette 2015/50)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.06.2014   JP 2014121025**

(43) Date of publication of application:
**19.04.2017   Bulletin 2017/16**

(73) Proprietor: **Bridgestone Corporation
Tokyo 104-8340 (JP)**

(72) Inventors:
• **KATAYAMA, Shinsaku
Tokyo 104-8340 (JP)**

• **KAJI, Yoshio
Tokyo 104-8340 (JP)**
• **KURATA, Takayuki
Tokyo 104-8340 (JP)**

(74) Representative: **Oxley, Robin John George
Marks & Clerk LLP
90 Long Acre
London WC2E 9RA (GB)**

(56) References cited:
**EP-A2- 1 000 773      WO-A1-2014/084325
DE-A1- 19 708 613      DE-A1-102011 055 915
JP-A- 2010 208 419      JP-A- 2011 084 173
JP-A- 2014 008 901      JP-A- 2014 073 694
JP-U- S62 196 706**

**Description**

TECHNICAL FIELD

The present invention relates to a tire having a block pattern and, in particular, to a tire featuring superior performances on snow.

BACKGROUND ART

Conventionally, attempts to improve fore-aft and lateral grip performances of a tire on snow have been made with winter tires by providing V-shaped lateral grooves (hereinafter referred to as "diagonal lug grooves") to gain the block edge components in both the tire axial direction and the tire circumferential direction.

PRIOR ART DOCUMENT

Patent Document

Patent Document 1: Japanese Unexamined Patent Application Publication No. 2001-191740

SUMMARY OF THE INVENTION

Problem to be Solved by the Invention

However, the use of smaller diagonal angles for lug grooves (hereinafter "diagonal" meaning diagonal with respect to the tire axial direction) to secure acceleration performance on snow results in reduced efficiency in water expulsion in the tire axial direction. This will lead to lowered anti-hydroplaning performance on wet roads. On the other hand, the use of larger diagonal angles for lug grooves may improve the anti-hydroplaning performance, but lower the grip performances on snow, thus presenting the problem of inadequate acceleration performance on snow.

The present invention has been made in view of the foregoing problems, and an object of the invention is to provide a tire having V-shaped lug grooves capable of improving both the grip performances on snow and anti-hydroplaning performance.

Means for Solving the Problem

The present invention relates to a tire as defined in Claim 1 that has diagonal lug grooves formed on a tread surface thereof extending from a tire center portion to an axial end of a tread diagonally with respect to a tire circumferential direction and a tire axial direction. When an angle of diagonal lug grooves with respect to the tire axial direction is designated as a lug groove diagonal angle $\theta_{LG}$, and an angle of a normal line of a leading-end profile line of a contact patch shape of the tire with respect to the tire axial direction as a profile line diagonal angle $\theta_{FP}$ and when a range covering 20% in width of the contact patch width with an equatorial plane at a center is designated as a center portion, a range covering 20% in width of the contact patch width on each axially outer side adjacent to a center portion as an intermediate portion (hereinafter referred to as "2nd portion"), and a range covering 20% in width of the contact patch width on each axially outer side adjacent to the 2nd portion as a shoulder portion. Absolute values of difference between the lug groove diagonal angle $\theta_{LG}$ and the profile line diagonal angle $\theta_{FP}$ at different positions in the tire axial direction in the center portion and the 2nd portion are larger than the absolute value of the difference in the shoulder portion. The absolute values of the difference between the lug groove diagonal angle ($\theta_{LG}$) and the profile line diagonal angle ($\theta_{FP}$) in the center portion and the intermediate portion at different positions in the tire axial direction are 20° or more and 50° or less and wherein the absolute value of the difference between the lug groove diagonal angle ($\theta_{LG}$) and the profile line diagonal angle ($\theta_{FP}$) at different positions in the tire axial direction in the shoulder portion is 0° or more and 30° or less.

It is to be noted that the "contact patch shape" and "contact patch width" are those measured under tire measurement conditions specified by JATMA for the applicable tire size (Tires are first fitted on applicable rims. Tires for passenger cars are left standing for 24 hours at an internal pressure of 180 kPa and room temperature of 25°C ± 2°C, and then the internal pressure is readjusted before measurement. In the measurement of the contact patch shape, static load radius measurement conditions are used (mass equivalent to 88% of the maximum load capacity of the tire is applied)).

Thus, the lug grooves are formed such that the difference between the lug groove diagonal angle $\theta_{LG}$ and the profile-line diagonal angle $\theta_{FP}$ in the shoulder portion is made smaller. As a result, the anti-hydroplaning performance can be improved while retaining the grip performances on snow.

It should be noted that the foregoing summary of the invention does not necessarily recite all the features essential to the invention. Therefore, it is to be understood that the subcombinations of these features also fall within the scope of the invention. It is also to be appreciated that the left and right patterns satisfying the features described above on a tire having left-right asymmetric tread patterns also fall within the scope of the invention.

BRIEF DESCRIPTION OF THE DRAWINGS

FIG. 1 is an illustration showing a tread pattern of a tire according to an embodiment of the invention.
FIG. 2 is an illustration for explaining the mechanism for generating grip forces on snow.
FIG. 3 is an illustration showing a tread pattern of a conventional tire .

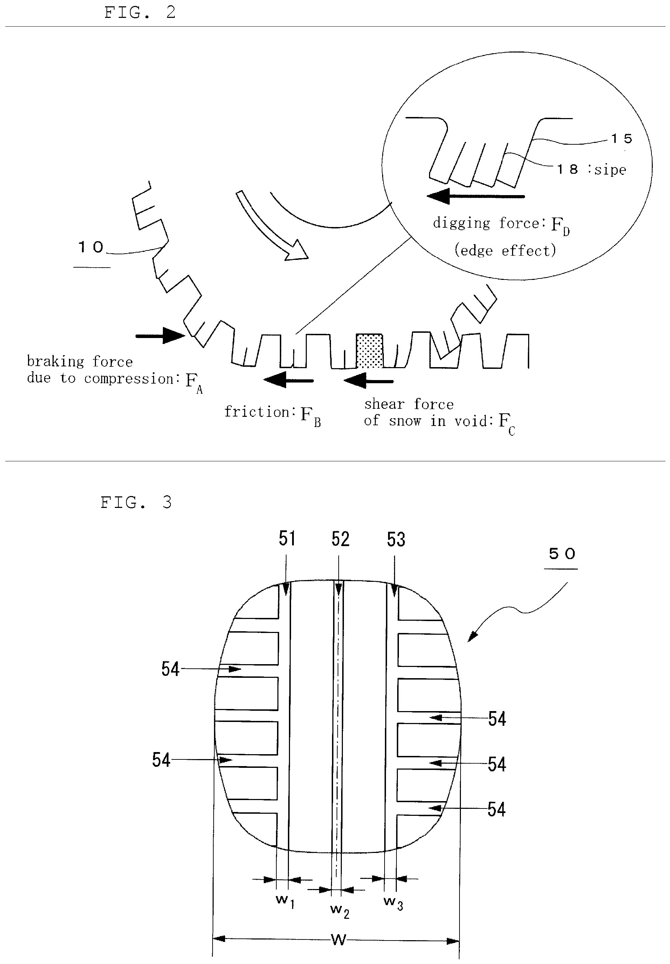

FIG. 3 is an illustration showing a tread pattern of a conventional tire.

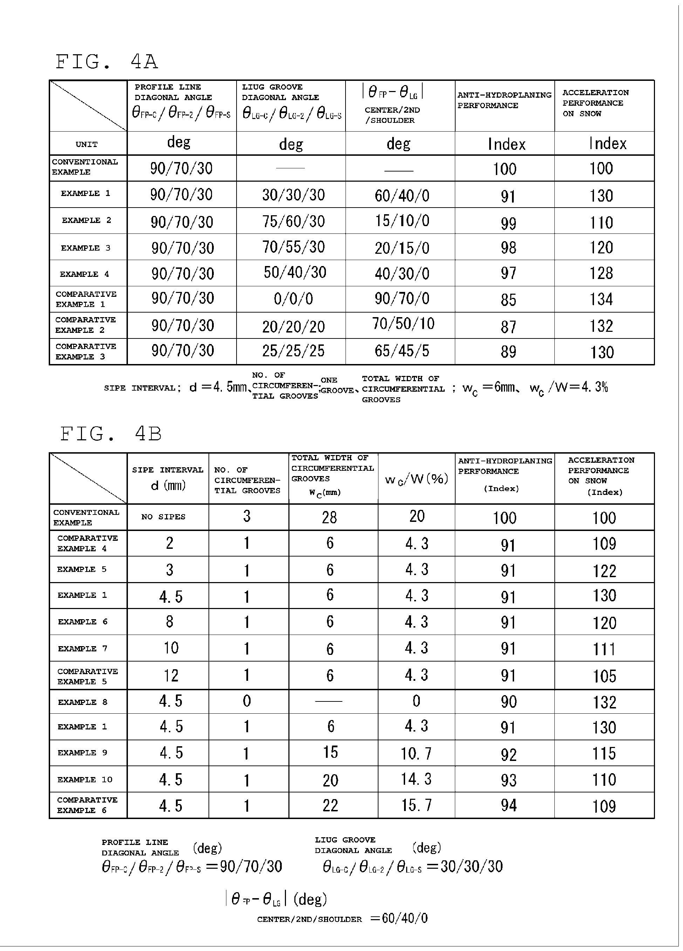

FIGs. 4A and 4B are tables showing test tire specifications and results of hydroplaning tests and acceleration performance tests on snow.

## MODE FOR CARRYING OUT THE INVENTION

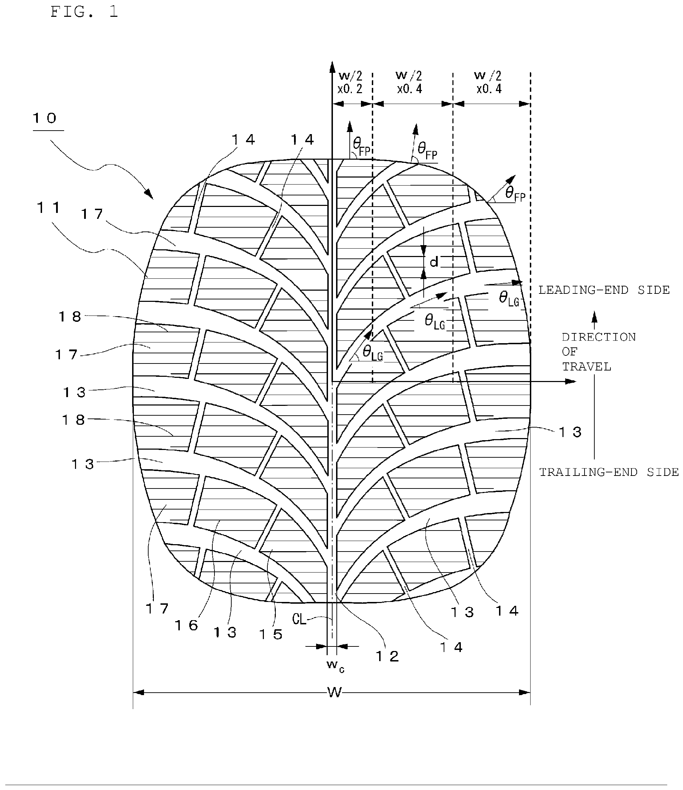

FIG. 1 is an illustration showing an example of a footprint with a profile line defining a contact patch shape of a tire 10 according to an embodiment of the invention. From the downside to the upside of the illustration is the direction in which a vehicle advances, and the upside is the leading-end side and the downside the trailing-end side. Also, the left-right direction is the axial direction of the tire.

As shown in the illustration, the tire 10 includes a tread 11, a rib groove 12, diagonal lug grooves 13, narrow grooves 14, center blocks 15, 2nd blocks 16, shoulder blocks 17, and sipes 18.

The rib groove 12 is a circumferential groove extending continuously along the equatorial plane CL which is the axial center of the tread 11 surface. In the present example, only one rib groove 12 is provided, and the groove width $w_c$ is set to 20% or less of the contact patch width W of the tire 10.

The diagonal lug grooves 13 are the grooves formed to extend in directions intersecting with the tire circumferential and axial directions such that they have one end thereof communicating with the rib groove 12 and the other end thereof opening on the axial end of the tread surface of the tread 11. And two diagonal lug grooves 13, 13 extending right and left, respectively, from the rib groove 12, form lateral grooves in an approximately V shape. The right-hand diagonal lug grooves 13 extend from lower left to upper right, whereas the left-hand diagonal lug grooves 13 extend from lower right to upper left. At the same time, both have one end thereof communicating with the rib groove 12 on the trailing-end side and the other end thereof opening on the axial end of the tread on the leading-end side.

The narrow grooves 14, which are formed to intersect with the diagonal lug grooves 13, are the grooves narrower than the diagonal lug grooves 13. And the inclination (inclination with respect to the tire axial direction) of the narrow grooves 14 located on the axially outer side is greater than that of the narrow grooves 14 located on the axially inner side.

Thus, the center blocks 15 are defined by the rib groove 12, the diagonal lug grooves 13 and the narrow grooves 14 positioned on the axially inner side, the 2nd blocks 16 are defined by the diagonal lug grooves 13 and the narrow grooves 14, and the shoulder blocks 17 are defined by the diagonal lug grooves 13 and the narrow grooves 14 positioned on the axially outer side.

Formed on the surfaces of the blocks 15, 16, and 17 are sipes 18 extending approximately in the tire axial direction (angle with respect to the axial direction being within +10°) .

As shown in FIG. 1, let us designate the range of W×0.1 in width on each of right and left axially outer side of the equatorial plane CL of the tire (range of W×0.2 in width with the equatorial plane CL at the center) as the center portion, the expulsion of the pattern. As a result, the tire as a whole shows the best water expulsion efficiency and superior anti-hydroplaning performance.

However, the winter tire as in the case of the tire 10 in the present example must have grip performances on snow. In order to secure grip performances on snow, it is necessary that the lug groove diagonal angle $\theta_{LG}$ be made smaller. To secure grip performances on snow without reduction in anti-hydroplaning performance, therefore, $|\theta_{FP} - \theta_{LG}|$ should be set such that $|\theta_{FP} - \theta_{LG}|$ in the center portion and the intermediate portion at different positions in the tire axial direction are 20° or more and 50° or less and $|\theta_{FP} - \theta_{LG}|$ at different positions in the tire axial direction in the shoulder portion is 0° or more and 30° or less.

FIG. 2 illustrates the mechanism for generating grip forces on snow.

The generation factors determining grip forces on snow are a compression resistance $F_A$ as a running resistance acting on the front of the tire 10, a surface friction force $F_B$ acting on the blocks 15 (or blocks 16 and 17), a snow column shearing force $F_C$ acting on the grooves (diagonal lug grooves 13 here), and a digging force $F_D$ (edge effect) given by sipe edges and block edges. With the tire 10 having V-shaped diagonal lug grooves 13, 13, the snow column shearing force during braking and drive is secured by the diagonal lug grooves 13.

Accordingly, as mentioned above, grip performances on snow can be ensured by making the lug groove diagonal angle $\theta_{LG}$ smaller. Also, the sipes 18 provided in the land portions (blocks 15, 16, 17) ensure the edge effects during braking and drive by an increased number of small edges without reducing block rigidity.

Also, in the present example, both the absolute value of difference $|\theta_{FP-C} - \theta_{LG-G}|$ in the center portion and the absolute value of difference $|\theta_{FP-2} - \theta_{LG-2}|$ in the 2nd portion are set larger than the absolute value of difference $|\theta_{FP-S} - \theta_{LG-S}|$ in the shoulder portion. As a result, the water expulsion from the shoulder portions is made easier while retaining the grip performances on snow in the tire center and 2nd portions. Also, the shoulder portions, which have smaller lug groove diagonal angle $\theta_{LG-S}$, can retain the grip performances on snow.

In other words, the arrangement of $|\theta_{FP-S} - \theta_{LG-S}| < |\theta_{FP-C} - \theta_{LG-C}|, |\theta_{FP-2} - \theta_{LG-2}|$ achieves high grip performances on snow while retaining the anti-hydroplaning performance.

The absolute value of difference $|\theta_{FP-C} - \theta_{LG-C}|$ in the center portion and the absolute value of difference $|\theta_{FP-2} - \theta_{LG-2}|$ in the 2nd portions are both 20° or more and 50° or less, and more preferably 25° or more and 40° or less.

Also, the absolute value of difference $|\theta_{FP-S} - \theta_{LG-S}|$ in the shoulder portions is 0° or more and 30° or less, and more preferably 0°or more and 20°or less.

Also, in the present example, the center blocks 15 are such that the difference between the maximum value and the minimum difference $|\theta_{FP-C} - \theta_{LG-G}|$ in the center portion and the absolute value of difference $|\theta_{FP-2} - \theta_{LG-2}|$ in the 2nd portion are set larger than the absolute value of difference $|\theta_{FP-S} - \theta_{LG-S}|$ in the shoulder portion. As a result, the water expulsion from the shoulder portions is made easier while retaining the grip performances on snow in the tire center and 2nd portions. Also, the shoulder portions, which have smaller lug groove diagonal angle $\theta_{LG-S}$, can retain the grip performances on snow.

In other words, the arrangement of $|\theta_{FP-S} - \theta_{LG-S}| < |\theta_{FP-C} - \theta_{LG-C}|, |\theta_{FP-2} - \theta_{LG-2}|$ achieves high grip performances on snow while retaining the anti-hydroplaning performance.

The absolute value of difference $|\theta_{FP-C} - \theta_{LG-C}|$ in the center portion and the absolute value of difference $|\theta_{FP-2} - \theta_{LG-2}|$ in the 2nd portions are both preferably 20° or more and 50° or less, and more preferably 25°or more and 40° or less.

Also, the absolute value of difference $|\theta_{FP-S} - \theta_{LG-S}|$ in the shoulder portions is preferably 0° or more and 30° or less, and more preferably 0°or more and 20°or less.

Also, in the present example, the center blocks 15 are such that the difference between the maximum value and the minimum value of the lug groove diagonal angle $\theta_{LG-C}$ in the center portion is set smaller than the difference between the maximum value and the minimum value of the lug groove diagonal angle $\theta_{LG-S}$ in the shoulder portion and that the difference between the maximum value and the minimum value of the lug groove diagonal angle $\theta_{LG-S}$ in the shoulder portion is set smaller than the difference between the maximum value and the minimum value of the lug groove diagonal angle $\theta_{LG-2}$ in the 2nd portion. As a result, the lug groove diagonal angle $\theta_{LG-C}$ in the center portion is made larger, and at the same time the change in the lug groove diagonal angle $\theta_{LG}$ is made smaller. And the change in the lug groove diagonal angle $\theta_{LC-2}$ in the 2nd portion is made larger, and thus the lug groove diagonal angle $\theta_{LG-S}$ in the shoulder portion can be made smaller. Hence, the water expulsion from the shoulder portion can be made more easily, while retaining the grip performances on snow in the center portion. Also, with the lug groove diagonal angle $\theta_{LG-S}$ and the change in angle in the shoulder portion made smaller, both the grip performances on snow and water expulsion performance can be improved.

The groove width $w_c$ of the rib groove 12 is preferably 20% or less of the contact patch width W, and more preferably 15% or less thereof. With the ratio of $w_c$/W set like this, it is possible to retain the ratio of the V-shaped lug grooves in the pattern having the same negative rate. And this can improve both the acceleration performance on snow and water expulsion performance.

Also, as a result, the negative rate of the tire center portion with larger lug groove diagonal angle $\theta_{LG}$ is made lower, and thus the block rigidity in the center portion is retained, because the groove width of the rib groove 12 and the groove width of the diagonal lug grooves 13 on the rib groove 12 side are both narrower than the groove width of the diagonal lug grooves 13 at the axial end of the tire. At the same time, the negative rate of the shoulder portion with smaller lug groove diagonal angle $\theta_{LG}$ is made higher, and thus the water expulsion performance is retained. Accordingly, both the acceleration performance on snow and water expulsion performance can be further improved.

Also, the interval between the sipes 18, 18 provided on the surface of the blocks 15, 16, 17 is preferably 3.0 mm or more and 10 mm or less, and more preferably 3.0 mm or more and 8.0 mm or less. By restricting the block width of the sub-blocks defined by the circumferentially neighboring sipes 18, 18 like this, it is possible to bring out the sipe edge effect effectively while retaining the block rigidity.

In other words, if the block width of the sub-blocks is less than 3.0 mm, then the block rigidity cannot be retained because of too small block width of the sub-blocks. In contrast to this, if the block width of the sub-blocks is more than 10 mm, then sufficient sipe edge effect cannot be obtained because of too few sub-blocks (number of sipes).

Exemplary Embodiments

The present invention will be explained in detail hereinbelow, based on exemplary embodiments.

The rim and internal pressure used comply with the applicable rim and the air pressure-load capacity correspondence table for the sizes of radial ply tires specified by JATMA YEAR BOOK (2011 Japan Automobile Tire Manufacturers Association Standard).

The tire size of the test tires was 195/65R15. The pattern of all Examples 1 to 10 had V-shaped lug grooves, one rib groove provided in the center portion, narrow grooves, and sipes formed on the blocks defined by the lug grooves, rib groove, and narrow grooves as shown in FIG. 1. The groove depth of the lug grooves, rib groove, and narrow grooves was 9 mm, and the depth of the sipes was all 6 mm.

As shown in FIG. 3, the pattern of the tire 50 of Conventional Example had 3 circumferential grooves 51 to 53 and lug grooves 54 with the diagonal angle of 0° formed in the shoulder areas only.

Also, with the tire 50 of Conventional Example, the ratio of the total groove width $W_0$ of the groove widths $w_1$, $w_2$, $w_3$ of the three circumferential grooves 51 to 53 to the contact patch width W ($W_0$/W) was 20%.

The negative rates of the tires of Examples 1 to 10 and Conventional Example were all 35%.

For comparison, tires with a pattern whose $|\theta_{FP}$

- $\theta_{LG}|$ is in excess of 60° (Comparative Examples 1 to 3), tires with a pattern whose interval between sipes is less than 3 mm or more than 10 mm (Comparative Examples 4 and 5), and tires with a pattern whose groove width of rib groove is more than 15% of the contact patch width (Comparative Example 6) were prepared, and the same test was performed on all of them. The negative rate of Comparative

It is to be noted that the test tires were all winter tires. Hence, the performance judgments were made by considering up to 10% drop from Conventional Example as being in an allowable range in anti-hydroplaning performance and 10% or more of improvement on Conventional Example as being necessary in acceleration performance on snow.

A description is given of the patterns of Examples 1 to 10 and Comparative Examples 1 to 6:

Example 1 (not according to the invention)

- Profile line diagonal angle $\theta_{FP}$
Center portion $\theta_{FP\text{-}C}$/ 2nd portion $\theta_{FP\text{-}2}$/ shoulder portion

$$\theta_{FP\text{-}S} = 90° \ / \ 70° \ / \ 30°$$

- Lug groove diagonal angle $\theta_{LG}$
Center portion $\theta_{LG\text{-}C}$/ 2nd portion $\theta_{LG\text{-}2}$/ shoulder portion

$$\theta_{FLG\text{-}S} = 30° \ / \ 30° \ / \ 30°$$

- Sipe interval d = 4.5 mm
- Rib groove
- One, $w_C$ = 6 mm, $w_C/W$ = 4.3%

Example 2 is the same as Example 1 except for center portion $\theta_{LG\text{-}C}$/ 2nd portion $\theta_{LG\text{-}2}$/ shoulder portion $\theta_{LG\text{-}S}$ = 75° / 60° / 30°.

Example 3 is the same as Example 1 except for center portion $\theta_{LG\text{-}C}$/ 2nd portion $\theta_{LG\text{-}2}$/ shoulder portion $\theta_{LG\text{-}S}$ = 70° / 55° / 30°.

Example 4 is the same as Example 1 except for center portion $\theta_{LG\text{-}C}$/ 2nd portion $\theta_{LG\text{-}2}$/ shoulder portion $\theta_{LG\text{-}S}$ = 50° / 40° / 30°.

Comparative Example 1 is the same as Example 1 except for center portion $\theta_{LG\text{-}C}$/ 2nd portion $\theta_{LG\text{-}2}$/ shoulder portion $\theta_{LG\text{-}S}$ = 0° / 0° / 0°.

Comparative Example 2 is the same as Example 1 except for center portion $\theta_{LG\text{-}C}$/ 2nd portion $\theta_{LG\text{-}2}$/ shoulder portion $\theta_{LG\text{-}S}$ = 20° / 20° / 20°.

Comparative Example 3 is the same as Example 1 except for center portion $\theta_{LG\text{-}C}$/ 2nd portion $\theta_{LG\text{-}2}$/ shoulder portion $\theta_{LG\text{-}S}$ = 25° / 25° / 25°.

Example 5 (not according to the invention) is the same as Example 1 except for sipe interval being 3 mm.

Example 6 (not according to the invention) is the same as Example 1 except for sipe interval being 8 mm.

Example 7 (not according to the invention) is the same as Example 1 except for sipe interval being 10 mm.

Comparative Example 4 is the same as Example 1 except for sipe interval being 2 mm.

Comparative Example 5 is the same as Example 1 except for sipe interval being 12 mm.

Example 8 is the same as Example 1 except for the absence of rib groove ($w_C/W$ = 0%) .

Example 9 (not according to the invention) is the same as Example 1 except for $w_C/W$ being 10.7%.

Example 10 (not according to the invention) is the same as Example 1 except for $w_C/W$ being 14.3%.

Comparative Example 6 is the same as Example 1 except for $w_C/W$ being 15.7%.

As shown in the table of FIG. 4A, the tires of Examples 2 to 4, of which the absolute value of difference between the lug groove diagonal angle and the profile line diagonal angle $|\theta_{FP} - \theta_{LG}|$ is as set out in Claim 1, all displayed the acceleration performance on snow of 10% or more higher than that of Conventional Example. As for the anti-hydroplaning performance, these Examples showed performances lower than that of the Conventional Example, but performances within the allowable range. Therefore, it was confirmed that the tires according to the present invention feature improved grip performances on snow while retaining the anti-hydroplaning performance.

In contrast to this, Comparative Examples 1 to 3 showed both $|\theta_{FP\text{-}C} - \theta_{LG\text{-}G}|$ and $|\theta_{FP\text{-}2} - \theta_{LG\text{-}2}|$ in excess of 60° because of the small angles of the lug grooves. As a result, while their acceleration performance on snow improved, their anti-hydroplaning performance dropped below the allowable range.

When Examples 1 to 4 are compared with each other, it has been confirmed that if $|\theta_{FP\text{-}C} - \theta_{LG\text{-}G}|$ and $|\theta_{FP\text{-}2} - \theta_{LG\text{-}2}|$ are both more than 15°, then the acceleration performance improves while $_{FP} - \theta_{LG}|$ is within a range of 0° or more and 60° or less at different positions in the tire axial direction and both the absolute values of difference in the center portion $|\theta_{FP\text{-}C} - \theta_{LG\text{-}G}|$ and the 2nd portion $|\theta_{FP\text{-}2} - \theta_{LG\text{-}2}|$ are larger than the absolute value of difference in the shoulder portion $|\theta_{FP\text{-}S} - \theta_{LG\text{-}S}|$, all displayed the acceleration performance on snow of 10% or more higher than that of Conventional Example. As for the anti-hydroplaning performance, these Examples showed performances lower than that of the Conventional Example, but performances within the allowable range. Therefore, it was confirmed that the tires according to the present invention feature improved grip performances on snow while retaining the anti-hydroplaning performance.

In contrast to this, Comparative Examples 1 to 3 showed both $|\theta_{FP-C} - \theta_{LG-G}|$ and $|\theta_{FP-2} - \theta_{LG-2}|$ in excess of 60° because of the small angles of the lug grooves. As a result, while their acceleration performance on snow improved, their anti-hydroplaning performance dropped below the allowable range.

When Examples 1 to 4 are compared with each other, it has been confirmed that if $|\theta_{FP-C} - \theta_{LG-G}|$ and $|\theta_{FP-2} - \theta_{LG-2}|$ are both more than 15°, then the acceleration performance improves while retaining the anti-hydroplaning performance even when $|\theta_{FP-S} - \theta_{LG-S}|$ is 0°.

It was also found that when $|\theta_{FP-C} - \theta_{LG-G}|$ and $|\theta_{FP-2} - \theta_{LG-2}|$ are both within a range of 20° to 40°, a good balance can be achieved between the anti-hydroplaning performance and the acceleration performance.

As shown in FIG. 4B, the tires of Examples 1, 5, and 6 of which the sipe interval d is 3 mm or more and 8 mm or less were found to show the acceleration performance on snow of 20% or more improved on Conventional Example, and the tire of Example 7 of which the sipe interval d is 10 mm to show the acceleration performance on snow of 10% or more improved on Conventional Example. It is to be noted that the anti-hydroplaning performance dropped lower than that of the Conventional Example, but remained within the allowable range.

In contrast to this, the tire of Comparative Example 4 of which the sipe interval d is 2 mm and the tire of Comparative Example 5 of which the sipe interval d is 12 mm showed the acceleration performance on snow dropping below the allowable range.

It was thus confirmed that the grip performances on snow cannot be improved sufficiently if the sipe interval d is less than 3 mm, which causes less than adequate block rigidity and, on the other hand, if the sipe interval d is more than 10 mm, which causes a reduced sipe edge effect.

The tires of Examples 1 and 8 to 10 of which the groove width $w_C$ of the rib groove is 20% or less of the contact patch width W were all found to show the acceleration performance on snow of 10% or more improved on Conventional Example. This was true with ones without rib groove, too. It is to be noted that the anti-hydroplaning performance of these tires dropped lower than that of the Conventional Example, but remained within the allowable range.

In contrast to this, the tire of Comparative Example 6 of which the groove width $w_C$ of the rib groove is in excess of 15% of the contact patch width W showed the grip performances on snow improving but not reaching 10% improvement on Conventional Example.

In the foregoing specification, the invention has been described with reference to specific embodiments and examples thereof. However, the technical scope of this invention is not to be considered as limited to those embodiments and examples. It will be evident to those skilled in the art that various modifications and improvements may be made thereto without departing from the broader spirit and scope of the invention. It will also be evident from the scope of the appended claims that all such modifications and improvements are intended to be included within the technical scope of this invention.

For example, in the foregoing embodiment, a description has been given of diagonal lug grooves 13 whose lug groove diagonal angle $\theta_{FG}$ gets smaller from the center portion to the shoulder portion. However, the lug groove diagonal angle $\theta_{FG}$ may be constant, that is, the diagonal lug grooves 13 may be linear as long as the conditions of $0° \leqq |\theta_{FP} - \theta_{LG}| \leqq 60°$ and $|\theta_{FP-S} - \theta_{LG-S}| < |\theta_{FP-C} - \theta_{LG-C}|$, $|\theta_{FP-2} - \theta_{LG-2}|$ are satisfied.

Also, in the foregoing embodiment, the difference between the maximum value and the minimum value of the lug groove diagonal angle $\theta_{LG-C}$ in the center portion is smaller than the difference between the maximum value and the minimum value of the lug groove diagonal angle $\theta_{LG-S}$ in the shoulder portion, and the difference between the maximum value and the minimum value of the lug groove diagonal angle $\theta_{LG-S}$ in the shoulder portion is smaller than the difference between the maximum value and the minimum value of the lug groove diagonal angle $\theta_{LG-2}$ in the 2nd portion. However, the ratio of the average value of the lug groove diagonal angles in the shoulder portion to the average value of the lug groove diagonal angles in the center portion may be made smaller than the ratio of the average value of the lug groove diagonal angles in the shoulder portion to the average value of the lug groove diagonal angles in the 2nd portion. And the ratio of the average value of the lug groove diagonal angles in the shoulder portion to the average value of the lug groove diagonal angles in the 2nd portion may be made smaller than the ratio of the average value of the lug groove diagonal angles in the 2nd portion to the average value of the lug groove diagonal angles in the center portion. This, too, can make the diagonal angle of the lug grooves greater in the center portion and gradually smaller from the 2nd portion to the shoulder portion. As a result, the water expulsion performance can be improved with certainty while retaining the grip performances on snow.

Also, in the foregoing embodiment, one rib groove 12 is provided and $w_C/W \leqq 0.2$. However, the rib groove 12 may be omitted. Moreover, the narrow grooves 14, which are not the essential feature of the present invention, may be omitted, too.

Furthermore, the sipes 18 are not limited to linear ones, but may be jagged or wavy ones.

Description of Reference Numerals

10   tire
11   tread
12   rib groove
13   diagonal lug groove
14   narrow groove
15   center block

16 2nd block
17 shoulder block
18 sipe
CL equatorial plane

## Claims

1. A tire (10) having:

   diagonal lug grooves (13) on a tread surface of the tire (10), the lug grooves (13) extending from a tire center portion to an axial end of a tread diagonally with respect to tire circumferential and axial directions;
   wherein when an angle ($\theta_{LG}$) of diagonal lug grooves (13) with respect to the tire (10) axial direction is designated as a lug groove diagonal angle ($\theta_{LG}$), and an angle ($\theta_{FP}$) of a normal line of a leading-end profile line of a contact patch shape of the tire (10) with respect to the tire (10) axial direction is designated as a profile line diagonal angle ($\theta_{FP}$), and
   when a range covering 20% in width of the contact patch width (W) with an equatorial plane (CL) at a center is designated as a center portion, a range covering 20% in width of the contact patch width (W) on each axially outer side adjacent to a center portion as an intermediate portion, and a range covering 20% in width of the contact patch width (W) on each axially outer side adjacent to the intermediate portion as a shoulder portion,
   **characterised in that** absolute values of difference between the lug groove diagonal angle ($\theta_{LG}$) and the profile line diagonal angle ($\theta_{FP}$) at different positions in the tire (10) axial direction in the center portion and the intermediate portion are larger than the absolute value of the difference between the lug groove diagonal angle ($\theta_{LG}$) and the profile line diagonal angle ($\theta_{FP}$) at different positions in the tire axial direction in the shoulder portion,
   wherein the absolute values of the difference between the lug groove diagonal angle ($\theta_{LG}$) and the profile line diagonal angle ($\theta_{FP}$) in the center portion and the intermediate portion at different positions in the tire axial direction are 20° or more and 50° or less and wherein the absolute value of the difference between the lug groove diagonal angle ($\theta_{LG}$) and the profile line diagonal angle ($\theta_{FP}$) at different positions in the tire axial direction in the shoulder portion is 0° or more and 30° or less.

2. The tire (10) according to claim 1, wherein a difference between a maximum value and a minimum value of the lug groove diagonal angle ($\theta_{LG}$) in the center portion is smaller than the difference between a maximum value and a minimum value of the lug groove diagonal angle ($\theta_{LG}$) in the shoulder portion and wherein the difference between the maximum value and the minimum value of the lug groove diagonal angle ($\theta_{LG}$) in the shoulder portion is smaller than the difference between a maximum value and a minimum value of the lug groove diagonal angle ($\theta_{LG}$) in the intermediate portion.

3. The tire (10) according to claim 1, wherein a ratio of an average value of the lug groove diagonal angles ($\theta_{LG}$) in the shoulder portion to an average value of the lug groove diagonal angles ($\theta_{LG}$) in the center portion is smaller than the ratio of the average value of the lug groove diagonal angles ($\theta_{LG}$) in the shoulder portion to an average value of the lug groove diagonal angles ($\theta_{LG}$) in the intermediate portion and wherein the ratio of the average value of the lug groove diagonal angles ($\theta_{LG}$) in the shoulder portion to the average value of the lug groove diagonal angles ($\theta_{LG}$) in the intermediate portion is smaller than the ratio of the average value of the lug groove diagonal angles ($\theta_{LG}$) in the intermediate portion to the average value of the lug groove diagonal angles ($\theta_{LG}$) in the center portion.

4. The tire (10) according to claim 1, further comprising a rib groove (12) continuously extending in the tire circumferential direction at the axial center of the tire (10), wherein the diagonal lug grooves (13) have one end thereof communicating with the rib groove (12) and the other end thereof opening on the axial end of the tread.

5. The tire (10) according to claim 4, wherein the groove width of the rib groove (12) is 20% or less of the contact patch width (W) of the tire (10) and wherein the groove width of the rib groove (12) and the groove width of the diagonal lug grooves (13) on a rib groove (12) side are narrower than the groove width of the diagonal lug grooves (13) on an axial end side of the tire (10).

6. The tire (10) according to any of claims 1 to 5, wherein the tread surface of land portions defined by the diagonal lug grooves (13) has a plurality of sipes (18) extending in the tire (10) axial direction, the plurality of sipes (18) being arranged on the land portions at an interval between neighboring sipes of 3.0 mm or more and 10 mm or less.

## Patentansprüche

1. Reifen (10), aufweisend:

   diagonale Stollenrillen (13) auf einer Laufflächenoberfläche des Reifens (10), wobei sich die Stollenrillen (13) von einem Reifen-Mittelteil zu einem axialen Ende einer Lauffläche diagonal zu Reifenumfangs- und -axialrichtungen erstrecken; wobei,
wenn ein Winkel ($\theta_{LG}$) diagonaler Stollenrillen (13) in Bezug auf die Reifen-(10)-Axialrichtung als Stollenrillen-Diagonalwinkel ($\theta_{LG}$) bezeichnet wird, und ein Winkel ($\theta_{FP}$) einer senkrechten Linie einer Vorderende-Profillinie einer Kontaktflächenform des Reifens (10) in Bezug auf die Reifen-(10)-Axialrichtung als Profillinien-Diagonalwinkel ($\theta_{FP}$) bezeichnet wird, und
wenn ein 20% in Breite der Kontaktflächenbreite (W) mit einer Äquatorialebene (CL) an einer Mitte abdeckender Bereich als Mittelteil bezeichnet wird, ein 20% in Breite der Kontaktflächenbreite (W) an jeder axial äußeren Seite neben einem Mittelteil abdeckender Bereich als Zwischenteil, und ein 20% in Breite der Kontaktflächenbreite (W) an jeder axial äußeren Seite neben dem Zwischenteil als Schulterteil,
**dadurch gekennzeichnet, dass** Absolutwerte einer Differenz zwischen dem Stollenrillen-Diagonalwinkel ($\theta_{LG}$) und dem Profillinien-Diagonalwinkel ($\theta_{FP}$) an unterschiedlichen Positionen in der Reifen-(10)-Axialrichtung im Mittelteil und im Zwischenteil größer sind als der absolute Wert der Differenz zwischen dem Stollenprofil-Diagonalwinkel ($\theta_{LG}$) und dem Profillinien-Diagonalwinkel ($\theta_{FP}$) an unterschiedlichen Postionen in der Reifenaxialrichtung im Schulterteil, wobei die absoluten Werte der Differenz zwischen dem Stollenrillen-Diagonalwinkel ($\theta_{LG}$) und dem Profillinien-Diagonalwinkel ($\theta_{FP}$) in dem Mittelteil und dem Zwischenteil an unterschiedlichen Positionen in der Reifenaxialrichtung 20° oder mehr und 50° oder weniger sind und wobei der absolute Wert der Differenz zwischen dem Stollenrillen-Diagonalwinkel ($\theta_{LG}$) und dem Profillinien-Diagonalwinkel ($\theta_{FP}$) an unterschiedlichen Positionen in der Reifenaxialrichtung im Schulterteil 0° oder mehr und 30° oder weniger ist.

2. Reifen (10) nach Anspruch 1, wobei eine Differenz zwischen einem maximalen Wert und einem minimalen Wert des Stollenrillen-Diagonalwinkels ($\theta_{LG}$) im Mittelteil kleiner ist als die Differenz zwischen einem maximalen Wert und einem minimalen Wert des Stollenrillen-Diagonalwinkels ($\theta_{LG}$) im Schulterteil und wobei die Differenz zwischen dem maximalen Wert und dem minimalen Wert des Stollenrillen-Diagonalwinkels ($\theta_{LG}$) im Schulterteil kleiner ist als die Differenz zwischen einem maximalen Wert und einem minimalen Wert des Stollenrillen-Diagonalwinkels ($\theta_{LG}$) im Zwischenteil.

3. Reifen (10) nach Anspruch 1, wobei ein Verhältnis eines durchschnittlichen Wertes der Stollenrillen-Diagonalwinkel ($\theta_{LG}$) im Schulterteil zu einem durchschnittlichen Wert der Stollenrillen-Diagonalwinkel ($\theta_{LG}$) im Mittelteil kleiner ist als das Verhältnis des durchschnittlichen Wertes der Stollenrillen-Diagonalwinkel ($\theta_{LG}$) im Schulterteil zum einem durschnittlichen Wert der Stollenrillen-Diagonalwinkel ($\theta_{LG}$) im Zwischenteil und wobei das Verhältnis des durchschnittlichen Wertes der Stollenrillen-Diagonalwinkel ($\theta_{LG}$) im Schulterteil zum durchschnittlichen Wert der Stollenrillen-Diagonalwinkel ($\theta_{LG}$) im Zwischenteil kleiner ist als das Verhältnis des durchschnittlichen Wertes der Stollenrillen-Diagonalwinkel ($\theta_{LG}$) im Zwischenteil zum durchschnittlichen Wert der Stollenrillen-Diagonalwinkel ($\theta_{LG}$) im Mittelteil.

4. Reifen (10) nach Anspruch 1, ferner umfassend eine Rippenrille (12), die sich kontinuierlich in der Reifenumfangsrichtung an der axialen Mitte des Reifens (10) erstreckt, wobei die diagonalen Stollenrillen (13) ein offenes Ende davon, das mit der Rippenrille (12) kommuniziert, und das andere Ende davon, das sich am axialen Ende der Lauffläche öffnet, aufweisen.

5. Reifen (10) nach Anspruch 4, wobei die Rillenbreite der Rippenrille (12) 20% oder weniger der Kontaktflächenbreite (W) des Reifens (10) ist und wobei die Rillenbreite der Rippenrille (12) und die Rillenbreite der diagonalen Stollenrillen (13) an einer Rippenrillen-(12)-Seite schmaler sind als die Rillenbreite der diagonalen Stollenrillen (13) an einer axialen Endseite des Reifens (10).

6. Reifen (10) nach einem der Ansprüche 1 bis 5, wobei die Laufflächenoberfläche von Stegabschnitten, die durch die diagonalen Stollenrillen (13) definiert werden, eine Vielzahl von Lamellen (18) aufweist, die sich in der Reifen-(10)-Axialrichtung erstrecken, wobei die Vielzahl von Lamellen (18) auf den Stegabschnitten in einem Abstand zwischen benachbarten Lamellen von 3,0 mm oder mehr und 10 mm oder weniger angeordnet sind.

**Revendications**

1. Pneu (10), présentant:

des rainures de relief diagonales (13) sur une surface de bande de roulement du pneu (10), les rainures de relief (13) s'étendant à partir d'une partie centrale de pneu vers une extrémité axiale d'une bande de roulement de manière diagonale par rapport à des directions circonférentielles et axiales de pneu; dans lequel, lorsqu'un angle ($\theta_{LG}$) de rainures de relief diagonales (13) par rapport à la direction axiale de pneu (10) est désigné en tant qu'angle diagonal de rainure de relief ($\theta_{LG}$), et un angle ($\theta_{FP}$) d'une ligne normale d'une ligne de profil d'extrémité d'attaque d'une forme de zone de contact du pneu (10) par rapport à la direction axiale du pneu (10) est désigné en tant qu'angle diagonal de ligne de profil ($\theta_{FP}$), et

lorsqu'une plage couvrant 20 %, en largeur, de la largeur de zone de contact (W) avec un plan équatorial (CL) au niveau d'un centre est désignée en tant que partie centrale, une plage couvrant 20 %, en largeur, de la largeur de zone de contact (W) sur chaque côté axialement extérieur à proximité adjacente d'une partie centrale est désignée en tant que partie intermédiaire, et une plage couvrant 20 %, en largeur, de la largeur de zone de contact (W) sur chaque côté axialement extérieur à proximité adjacente de la partie intermédiaire est désignée en tant que partie épaulement,

**caractérisé en ce que** des valeurs absolues de différence entre l'angle diagonal de rainure de relief ($\theta_{LG}$) et l'angle diagonal de ligne de profil ($\theta_{FP}$) au niveau de positions différentes dans la direction axiale du pneu (10) dans la partie centrale et la partie intermédiaire sont supérieures à la valeur absolue de la différence entre l'angle diagonal de rainure de relief ($\theta_{LG}$) et l'angle diagonal de ligne de profil ($\theta_{FP}$) au niveau de positions différentes dans la direction axiale de pneu dans la partie épaulement,

dans lequel les valeurs absolues de la différence entre l'angle diagonal de rainure de relief ($\theta_{LG}$) et l'angle diagonal de ligne de profil ($\theta_{FP}$) dans la partie centrale et la partie intermédiaire au niveau de positions différentes dans la direction axiale de pneu sont supérieures ou égales à 20° et inférieures ou égales à 50°, et dans lequel la valeur absolue de la différence entre l'angle diagonal de rainure de relief ($\theta_{LG}$) et l'angle diagonal de ligne de profil ($\theta_{FP}$) au niveau de positions différentes dans la direction axiale de pneu dans la partie épaulement est supérieure ou égale à 0° et inférieure ou égale à 30°.

2. Pneu (10) selon la revendication 1, dans lequel une différence entre une valeur maximale et une valeur minimale de l'angle diagonal de rainure de relief ($\theta_{LG}$) dans la partie centrale est inférieure à la différence entre une valeur maximale et une valeur minimale de l'angle diagonal de rainure de relief ($\theta_{LG}$) dans la partie épaulement et dans lequel la différence entre la valeur maximale et la valeur minimale de l'angle diagonal de rainure de relief ($\theta_{LG}$) dans la partie épaulement est inférieure à la différence entre une valeur maximale et une valeur minimale de l'angle diagonal de rainure de relief

($\theta_{LG}$) dans la partie intermédiaire.

3. Pneu (10) selon la revendication 1, dans lequel un rapport d'une valeur moyenne des angles diagonaux de rainure de relief ($\theta_{LG}$) dans la partie épaulement sur une valeur moyenne des angles diagonaux de rainure de relief ($\theta_{LG}$) dans la partie centrale est inférieur au rapport de la valeur moyenne des angles diagonaux de rainure de relief ($\theta_{LG}$) dans la partie épaulement sur une valeur moyenne des angles diagonaux de rainure de relief ($\theta_{LG}$) dans la partie intermédiaire et dans lequel

le rapport de la valeur moyenne des angles diagonaux de rainure de relief ($\theta_{LG}$) dans la partie épaulement sur la valeur moyenne des angles diagonaux de rainure de relief ($\theta_{LG}$) dans la partie intermédiaire est inférieur au rapport de la valeur moyenne des angles diagonaux de rainure de relief ($\theta_{LG}$) dans la partie intermédiaire sur la valeur moyenne des angles diagonaux de rainure de relief ($\theta_{LG}$) dans la partie centrale.

4. Pneu (10) selon la revendication 1, comprenant en outre une rainure de nervure (12) s'étendant de manière continue dans la direction circonférentielle de pneu au niveau du centre axial du pneu (10), dans lequel les rainures de relief diagonales (13) ont une de leurs extrémités qui communique avec la rainure de nervure (12) et leur autre extrémité qui débouche sur l'extrémité axiale de la bande de roulement.

5. Pneu (10) selon la revendication 4, dans lequel la largeur de rainure de la rainure de nervure (12) représente 20 % ou moins de 20 % de la largeur de zone de contact (W) du pneu (10) et dans lequel la largeur de rainure de la rainure de nervure (12) et la largeur de rainure des rainures de relief diagonales (13) d'un côté rainure de nervure (12) sont plus étroites que la largeur de rainure des rainures de relief diagonales (13) d'un côté extrémité axiale du pneu (10).

6. Pneu (10) selon l'une quelconque des revendications 1 à 5, dans lequel la surface de bande de roulement de parties appui définies par les rainures de relief (13) présente une pluralité de lamelles (18) s'étendant dans la direction axiale du pneu (10), la pluralité de lamelles (18) étant agencées sur les parties appui avec un intervalle entre des lamelles voisines supérieur ou égal à 3,0 mm et inférieur ou égal à 10 mm.

FIG. 1

FIG. 2

10

braking force
due to compression: $F_A$

friction: $F_B$

shear force
of snow in void: $F_C$

digging force: $F_D$
(edge effect)

15

18 :sipe

FIG. 3

51    52    53

50

54

54

54

54

54

54

$w_1$    $w_2$    $w_3$

W

FIG. 4A

| | PROFILE LINE DIAGONAL ANGLE $\theta_{FP-C}/\theta_{FP-2}/\theta_{FP-S}$ | LIUG GROOVE DIAGONAL ANGLE $\theta_{LG-C}/\theta_{LG-2}/\theta_{LG-S}$ | $\lvert\theta_{FP}-\theta_{LG}\rvert$ CENTER/2ND /SHOULDER | ANTI-HYDROPLANING PERFORMANCE | ACCELERATION PERFORMANCE ON SNOW |
|---|---|---|---|---|---|
| UNIT | deg | deg | deg | Index | Index |
| CONVENTIONAL EXAMPLE | 90/70/30 | —— | —— | 100 | 100 |
| EXAMPLE 1 | 90/70/30 | 30/30/30 | 60/40/0 | 91 | 130 |
| EXAMPLE 2 | 90/70/30 | 75/60/30 | 15/10/0 | 99 | 110 |
| EXAMPLE 3 | 90/70/30 | 70/55/30 | 20/15/0 | 98 | 120 |
| EXAMPLE 4 | 90/70/30 | 50/40/30 | 40/30/0 | 97 | 128 |
| COMPARATIVE EXAMPLE 1 | 90/70/30 | 0/0/0 | 90/70/0 | 85 | 134 |
| COMPARATIVE EXAMPLE 2 | 90/70/30 | 20/20/20 | 70/50/10 | 87 | 132 |
| COMPARATIVE EXAMPLE 3 | 90/70/30 | 25/25/25 | 65/45/5 | 89 | 130 |

SIPE INTERVAL: $d=4.5$mm、NO. OF CIRCUMFEREN-TIAL GROOVES: ONE GROOVE、TOTAL WIDTH OF CIRCUMFERENTIAL GROOVES; $w_C=6$mm、 $w_C/W=4.3$%

FIG. 4B

| | SIPE INTERVAL $d$ (mm) | NO. OF CIRCUMFEREN-TIAL GROOVES | TOTAL WIDTH OF CIRCUMFERENTIAL GROOVES $w_C$(mm) | $w_C/W$ (%) | ANTI-HYDROPLANING PERFORMANCE (Index) | ACCELERATION PERFORMANCE ON SNOW (Index) |
|---|---|---|---|---|---|---|
| CONVENTIONAL EXAMPLE | NO SIPES | 3 | 28 | 20 | 100 | 100 |
| COMPARATIVE EXAMPLE 4 | 2 | 1 | 6 | 4.3 | 91 | 109 |
| EXAMPLE 5 | 3 | 1 | 6 | 4.3 | 91 | 122 |
| EXAMPLE 1 | 4.5 | 1 | 6 | 4.3 | 91 | 130 |
| EXAMPLE 6 | 8 | 1 | 6 | 4.3 | 91 | 120 |
| EXAMPLE 7 | 10 | 1 | 6 | 4.3 | 91 | 111 |
| COMPARATIVE EXAMPLE 5 | 12 | 1 | 6 | 4.3 | 91 | 105 |
| EXAMPLE 8 | 4.5 | 0 | —— | 0 | 90 | 132 |
| EXAMPLE 1 | 4.5 | 1 | 6 | 4.3 | 91 | 130 |
| EXAMPLE 9 | 4.5 | 1 | 15 | 10.7 | 92 | 115 |
| EXAMPLE 10 | 4.5 | 1 | 20 | 14.3 | 93 | 110 |
| COMPARATIVE EXAMPLE 6 | 4.5 | 1 | 22 | 15.7 | 94 | 109 |

PROFILE LINE DIAGONAL ANGLE (deg) $\theta_{FP-C}/\theta_{FP-2}/\theta_{FP-S}=90/70/30$

LIUG GROOVE DIAGONAL ANGLE (deg) $\theta_{LG-C}/\theta_{LG-2}/\theta_{LG-S}=30/30/30$

$\lvert\theta_{FP}-\theta_{LG}\rvert$ (deg) CENTER/2ND/SHOULDER $=60/40/0$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001191740 A

**Non-patent literature cited in the description**

- JATMA YEAR BOOK. Japan Automobile Tire Manufacturers Association Standard, 2011